# EUROPEAN PATENT SPECIFICATION

(11) **EP 1 872 971 B1**
(45) Date of publication and mention of the grant of the patent: **01.10.2008**
(21) Application number: 06013206.5
(22) Date of filing: 27.06.2006
(51) Int. Cl.: B60B 27/02, F16D 41/32, F16D 41/18, F16D 41/30

(54) **Bicycle hub having shorter idle rotation distance**
Fahrradnabe mit verkürzter Distanz zur Leerlaufdrehung
Moyeu de cycle ayant une distance rèduite a la rotation au ralenti

(43) Date of publication of application: 02.01.2008
(73) Proprietor: Chosen Co., Ltd., Ho Mei, Chen Changhu Hsien (TW)
(72) Inventor: Chen, Ching-Su, Changhua City Changhua County (TW)
(74) Representative: Reichel, Wolfgang

(56) References cited:
- DE-A1- 10 012 466
- US-A- 5 704 859
- US-A1- 2005 183 918

## Description

The present invention relates to a hub and, more particularly, to a hub for a bicycle.

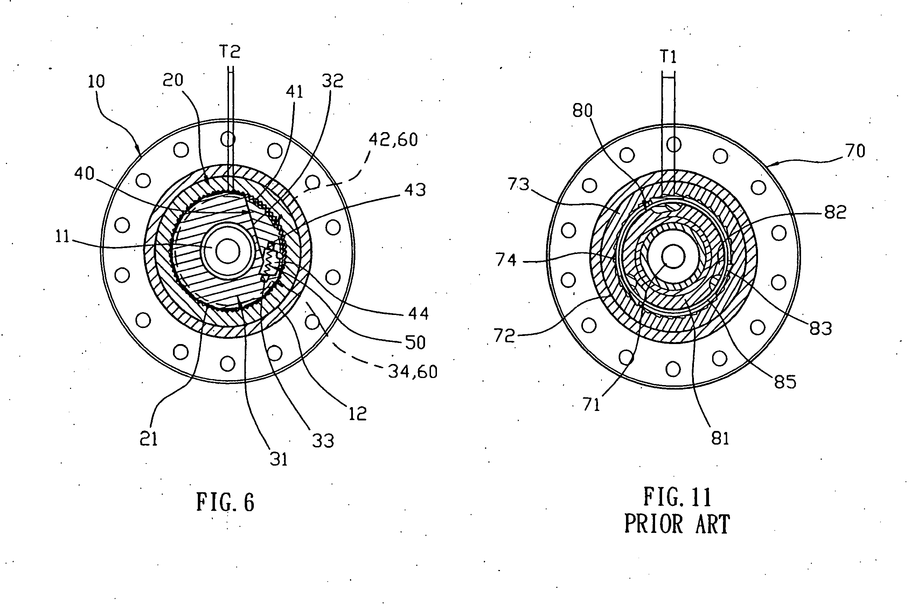

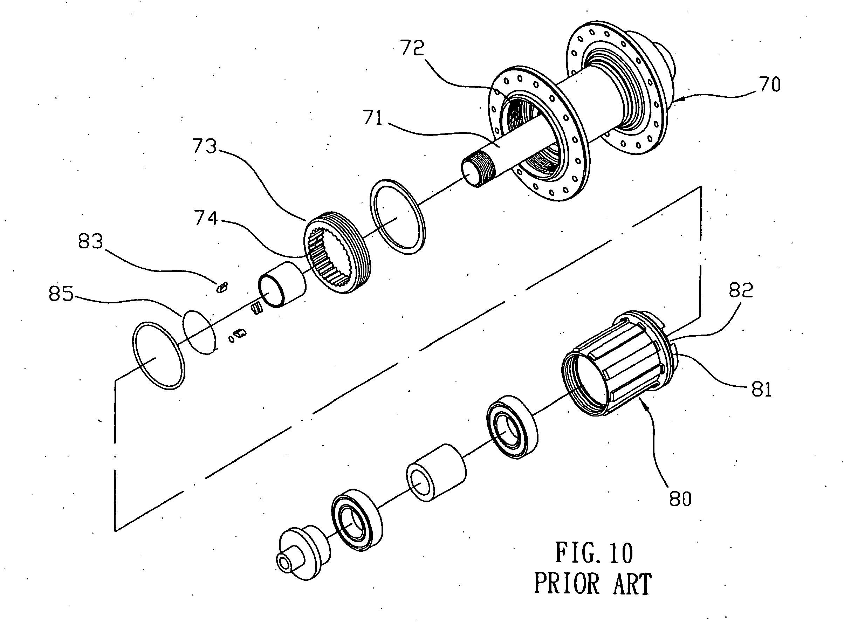

A conventional ratchet hub for a bicycle in accordance with the prior art shown in Figs. 10 and 11 comprises a shaft 71, a hub body 70 rotatably mounted on the shaft 71 and having an inside formed with a fixing recess 72, a locking ring 73 secured in the fixing recess 72 of the hub body 70 to drive and rotate hub body 70 and having an inside formed with a plurality of oneway ratchet teeth 74, a drive seat 80 rotatably mounted on the shaft 71 and having an end face 81 extended into the locking ring 73 and formed with a plurality of receiving slots 82, a plurality of pawl members 83 each pivotally mounted in the respective receiving slot 82 of the drive seat 80 and each meshing with the oneway ratchet teeth 74 of the locking ring 73, and an elastic ring 85 enclosed around the pawl members 83 to pivot the pawl members 83 outwardly in an inclined manner so that the pawl members 83 are engaged with the oneway ratchet teeth 74 of the locking ring 73. The hub body 70 is connected to a wheel of the bicycle. The shaft 71 is connected to a frame of the bicycle. The drive seat 80 is connected to a freewheel of the bicycle. The freewheel of the bicycle is driven by a chain which is driven by a chainwheel which is driven by a pedal that is pedalled by a rider.

In operation, when the flywheel is rotated normally, the drive seat 80 is rotated with the flywheel. At this time, the pawl members 83 are locked in the oneway ratchet teeth 74 of the locking ring 73, so that the locking ring 73 is rotated by the drive seat 80 to rotate the hub body 70 which rotates the wheel. On the contrary, when the flywheel stops rotating or when the rotation speed of the wheel is greater than that of the flywheel (when the bicycle is moved on the downward slope), the rotation speed of the locking ring 73 is greater than that of the drive seat 80, so that the oneway ratchet teeth 74 of the locking ring 73 press each of the pawl members 83. Thus, the drive seat 80 performs an idle rotation, so that the locking ring 73 and the hub body 70 are not rotated by the drive seat 80 and will not interfere with rotation of the drive seat 80. When the rotation speed of the drive seat 80 (or the flywheel) is greater than that of the hub body 70 (or the wheel), the locking ring 73 and the hub body 70 are rotated by the drive seat 80 again.

However, each of the pawl members 83 is pivotally mounted in the respective receiving slot 82 of the drive seat 80 and is engaged with the oneway ratchet teeth 74 of the locking ring 73 in an oblique manner, so that the length of each of the pawl members 83 is increased, and the tooth distance of the oneway ratchet teeth 74 of the locking ring 73 is also increased to mate with each of the pawl members 83, thereby lengthening the idle rotation distance "T1" (which is defined by the tooth distance of the oneway ratchet teeth 74 of the locking ring 73) between the locking ring 73 and each of the pawl members 83. Thus, the hub has a longer idle rotation distance, so that the hub body 70 is driven by the drive seat 80 during a period of time after the idle rotation of the drive seat 80, thereby causing inconvenience to the rider when pedaling the bicycle.

A hub showing the features of the preamble of claim 1 is known from US 2005/0 183 918 A1.

The primary objective of the present invention is to provide a bicycle hub having a shorter idle rotation distance.
Another objective of the present invention is to provide a hub, wherein the idle rotation distance between the locking ring and the pawl member is shortened.

These objectives are achieved with a hub with the features according to claim 1 of the present invention. Preferred embodiments of the invention are presented in the dependent subclaims.

A preferred embodiment of a hub is provided with locking teeth of a pawl member and locking teeth of a locking ring being arranged successively, so that the locking ring engages the pawl member immediately after the idle rotation of the drive seat, thereby shortening the idle rotation distance between the locking ring and the pawl member. According to the invention the hub has a shorter idle rotation distance, so that the hub body is driven by the drive seat immediately after the idle rotation of the drive seat, thereby facilitating the rider pedaling the bicycle.

Further benefits and advantages of the present invention will become apparent after a careful reading of the detailed description with appropriate reference to the accompanying drawings.

### In the drawings:

Fig. 1 is a perspective view of a hub in accordance with the preferred 20 embodiment of the present invention.
Fig. 2 is an exploded perspective view of the hub as shown in Fig. 1.
Fig. 3 is a perspective view of a pawl member of the hub as shown in Fig. 2.
Fig. 4 is a plan cross-sectional view of the hub as shown in Fig. 1.
Fig. 5 is a schematic plan cross-sectional view of the hub as shown in Fig. 1.
Fig. 6 is a plan cross-sectional view of the hub as shown in Fig. 1.
Fig. 7 is a schematic plan cross-sectional view of a hub in accordance with another preferred embodiment of the present invention.
Fig. 8 is an exploded perspective view of a hub in accordance with another preferred embodiment of the present invention.
Fig. 9 is a plan cross-sectional assembly view of the hub as shown in Fig. 8.
Fig. 10 is an exploded perspective view of a conventional hub in accordance with the prior art.
Fig. 11 is a plan cross-sectional assembly view of the conventional hub as shown in Fig. 10.

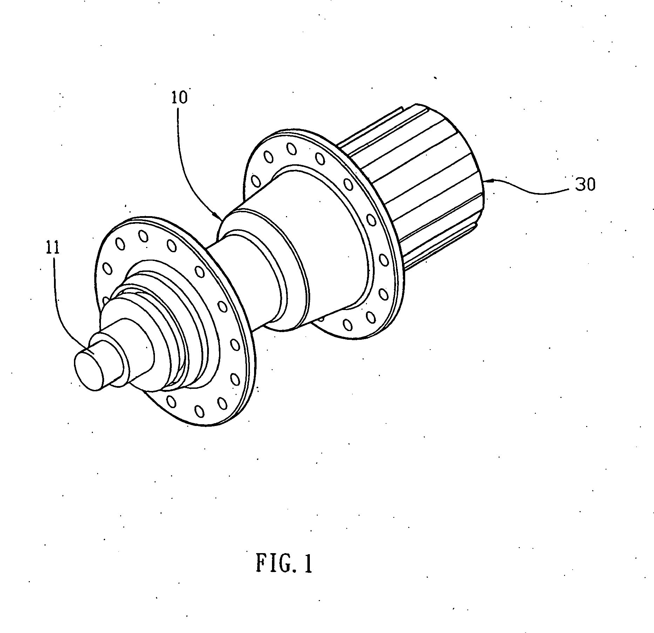

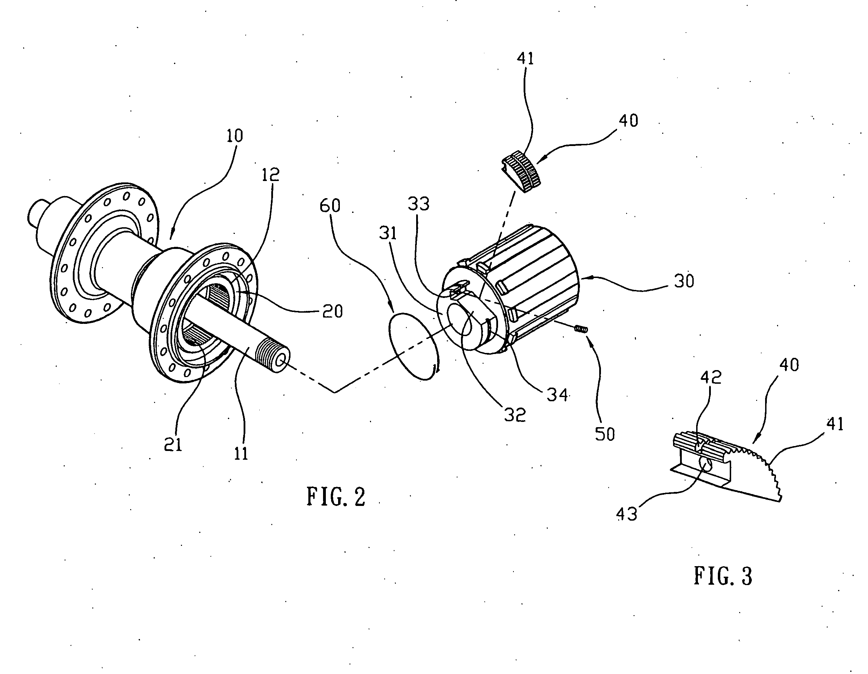

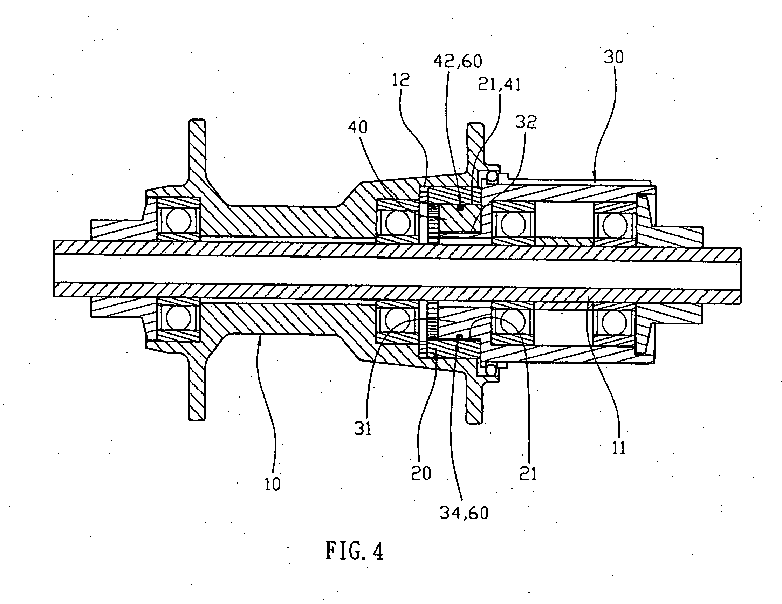

Referring to the drawings and initially to Figs. 1-5, a hub for a bicycle in accordance with the preferred embodiment of the present invention comprises a shaft 11, a hub body 10 rotatably mounted on the shaft 11, a drive seat 30 rotatably mounted on the shaft 11, a locking ring 20 mounted in either one of the hub body 10 and the drive seat 30 and having an inside formed with a plurality of locking teeth 21, a mounting portion 31 mounted on the other one of the hub body 10 and the drive seat 30 and extended into the locking ring 20, at least one pawl member 40 having a plurality of locking teeth 41 and movable on the mounting portion 31 between a first position where the locking teeth 41 of the pawl member 40 engage the locking teeth 21 of the locking ring 20 and a second position where the locking teeth 41 of the pawl member 40 disengage the locking teeth 21 of the locking ring 20, at least one elastic member 50 biased between the mounting portion 31 and the pawl member 40 to push the locking teeth 41 of the pawl member 40 toward the locking teeth 21 of the locking ring 20, and an elastic ring 60 enclosed around the mounting portion 31 and the pawl member 40 to limit the pawl member 40 on the mounting portion 31.

In the preferred embodiment of the present invention, the locking ring 20 is mounted in the hub body 10 to drive and rotate the hub body 10, and the mounting portion 31 is mounted on the drive seat 30.

The hub body 10 has an inside formed with a fixing recess 12, and the locking ring 20 is secured in the fixing recess 12 of the hub body 10 to drive and rotate the hub body 10.

The mounting portion 31 has a periphery formed with a chamfered slideway 32, and the pawl member 40 is slidable in the slideway 32 of the mounting portion 31. The mounting portion 31 has a receiving space 44 defined between the pawl member 40 and a closed end of the slideway 32 of the mounting portion 31 to allow retracting movement of the pawl member 40. The closed end of the slideway 32 of the mounting portion 31 is formed with a limit recess 33 to receive a first end of the elastic member 50. The periphery of the mounting portion 31 is formed with a retaining groove 34 to retain the elastic ring 60.

The pawl member 40 has a shape mating with that of the slideway 32 of the mounting portion 31 and has a size smaller than that of the slideway 32 of the mounting portion 3 1. The pawl member 40 has a periphery formed with the locking teeth 41. The periphery of the pawl member 40 is substantially arc-shaped and mates with the periphery of the mounting portion 31 to form a whole circle. The periphery of the pawl member 40 is formed with a retaining groove 42 to retain the elastic ring 60. The retaining groove 42 of the pawl member 40 and the retaining groove 34 of the mounting portion 31 form an annular groove. The pawl member 40 has a substantially sector-shaped profile and has a first side slidable in the slideway 32 of the mounting portion 31 and a second side formed with a limit recess 43 to receive a second end of the elastic member 50.

Thus, when the pawl member 40 is pushed outwardly relative to the mounting portion 31 to the first position, the locking teeth 41 of the pawl member 40 engage the locking teeth 21 of the locking ring 20, and when the pawl member 40 is pressed inwardly relative to the mounting portion 31 to the second position, the pawl member 40 is retracted into the receiving space 44, and the locking teeth 41 of the pawl member 40 disengage the locking teeth 21 of the locking ring 20.

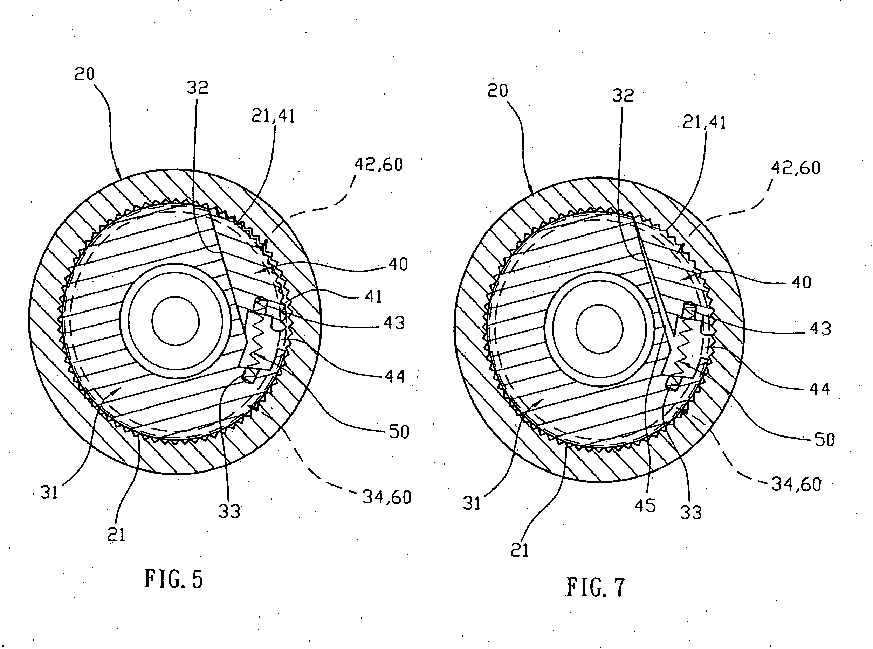

In operation, referring to Fig. 5 with reference to Figs. 1-4, when the drive seat 30 is driven and rotated by a freewheel of the bicycle, the mounting portion 31 is rotated with the drive seat 30. In such a manner, when the mounting portion 31 is rotated relative to the locking ring 20 in a first direction (in the clockwise direction) as shown in Fig. 6, the pawl member 40 is pushed outwardly relative to the mounting portion 31 to the first position, and the locking teeth 41 of the pawl member 40 engage the locking teeth 21 of the locking ring 20, so that the locking ring 20 is rotated with the mounting portion 31 to rotate the hub body 10.

On the contrary, when the flywheel stops rotating or when the rotation speed of the hub body 10 is greater than that of the drive seat 30, the drive seat 30 is rotated relative to the hub body 10 in a second direction (in the counterclockwise direction) as shown in Fig. 6. In such a manner, when the mounting portion 31 is rotated relative to the locking ring 20 in the second direction (in the counterclockwise direction) as shown in Fig. 6, the pawl member 40 is pressed inwardly relative to the mounting portion 31 to the second position to retract into the receiving space 44, and the locking teeth 41 of the pawl member 40 disengage the locking teeth 21 of the locking ring 20, so that the locking ring 20 is not rotated with the mounting portion 31, and the drive seat 30 and the hub body 10 perform an idle rotation. At this time, rotation of the locking ring 20 and the hub body 10 will not interfere with rotation of the mounting portion 31 and the drive seat 30.

On the other hand, when the rotation speed of the drive seat 30 is greater than that of the hub body 10, the locking ring 20 and the hub body 10 are rotated by the drive seat 30 again.

As shown in Fig. 6, the locking teeth 41 of the pawl member 40 and the locking teeth 21 of the locking ring 20 are arranged successively, so that the locking ring 20 engages the pawl member 40 immediately after the idle rotation of the drive seat 30, thereby shortening the idle rotation distance "T2" (which is defined by the tooth distance of the locking teeth 21 of the locking ring 20) between the locking ring 20 and the pawl member 40, such that the hub body 10 is driven by the drive seat 30 immediately after the idle rotation of the drive seat 30, thereby facilitating the rider pedaling the bicycle.

As shown in Fig. 7, the mounting portion 31 has an oblique gap 45 defined between contact sides of the pawl member 40 and the slideway 32 of the mounting portion 31 and connected to the receiving space 44 to allow retracting movement of the pawl member 40. Thus, when the pawl member 40 is pressed inwardly relative to the mounting portion 31 to the second position, the pawl member 40 is retracted into the receiving space 44 and the oblique gap 45, and when the pawl member 40 is pushed outwardly relative to the mounting portion 31 to the first position, the pawl member 40 is swayed outwardly, so that the locking teeth 41 of the pawl member 40 engage the locking teeth 21 of the locking ring 20 closely.

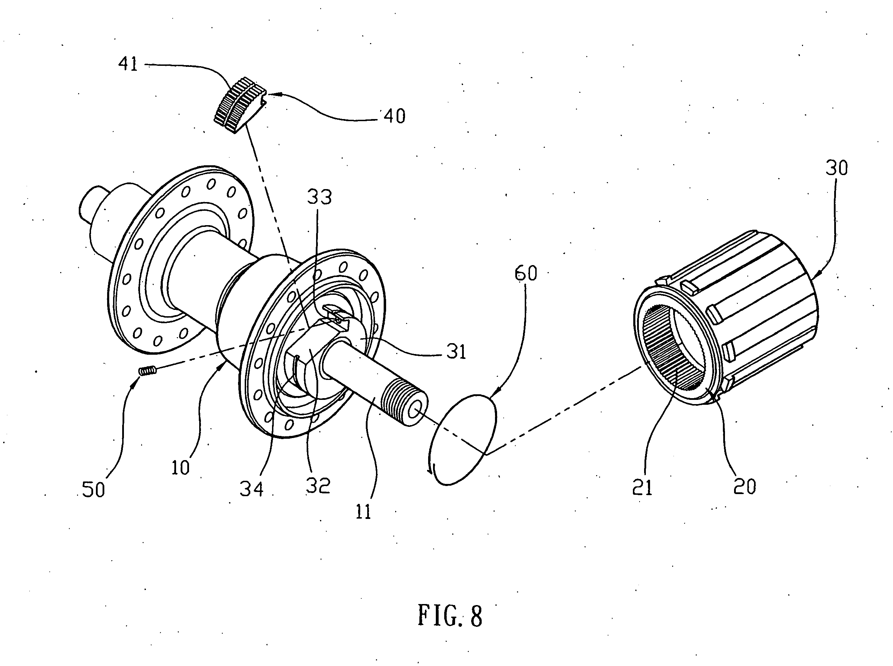

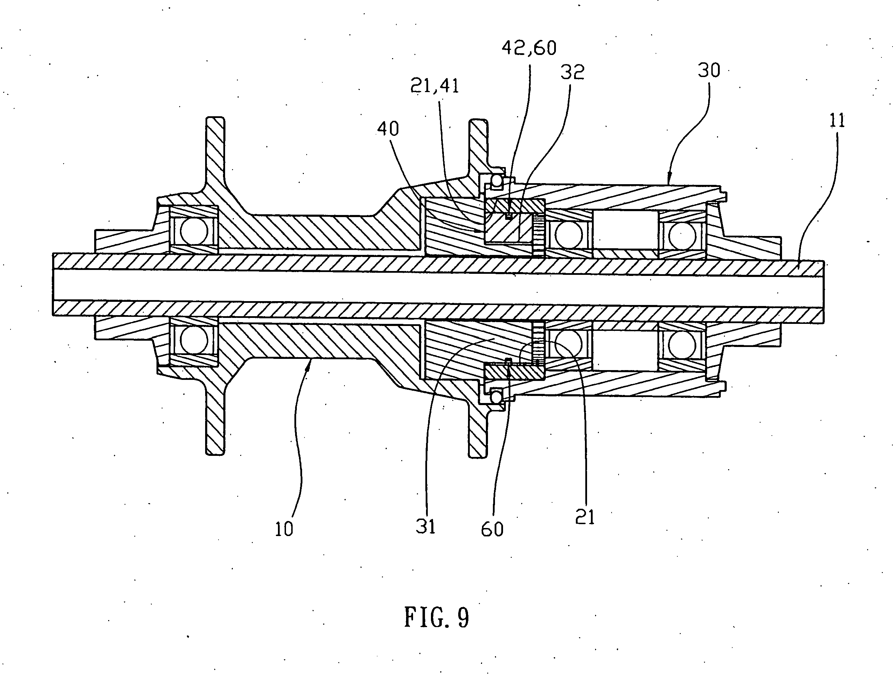

Referring to Figs. 8 and 9, the locking ring 20 is mounted in the drive seat 30, and the mounting portion 31 is mounted on the hub body 10 to drive and rotate the hub body 10.

Accordingly, the locking teeth 41 of the pawl member 40 and the locking teeth 21 of the locking ring 20 are arranged successively, so that the locking ring 20 engages the pawl member 40 immediately after the idle rotation of the drive seat 30, thereby shortening the idle rotation distance "T2" between the locking ring 20 and the pawl member 40. In addition, the hub has a shorter idle rotation distance, so that the hub body 10 is driven by the drive seat 30 immediately after the idle rotation of the drive seat 30, thereby facilitating the rider pedaling the bicycle.

## Claims

1. A hub, comprising:
a shaft (11);
a hub body (10) rotatably mounted on the shaft (11),
a drive seat (30) rotatably mounted on the shaft (11) ;
a locking ring (20) mounted in either one of the hub body (10) and the drive seat (30) and having an inside formed with a plurality of locking teeth (21);
a mounting portion (31) mounted on the other one of the hub body (10) and the drive seat (30) and extended into the locking ring (20);
at least one pawl member (40) movable on the mounting portion (31) between a first position where the locking teeth (41) of the pawl member (40) engage the locking teeth (21) of the locking ring (20) and a second position where the locking teeth (41) of the pawl member (40) disengage the locking teeth (41) of the locking ring (20) ; an elastic ring (60) enclosed around the mounting portion (31) and the pawl member (40) to limit the pawl member (40) on the mounting portion (31); **characterized by**
at least one elastic member (50) being biased between the mounting portion (31) and the pawl member (40) to push the locking teeth (41) of the pawl member (40) toward the locking teeth (21) of the locking ring (20); and the at least one pawl member (40) having a plurality of locking teeth (41).

2. The hub in accordance with claim 1, wherein the locking ring (20) is mounted in the hub body (10) to drive and rotate the hub body (10), and the mounting portion (31) is mounted on the drive seat (30).

3. The hub in accordance with claim 1, wherein the locking ring (20) is mounted in the drive seat (30), and the mounting portion (31) is mounted on the hub body (10) to drive and rotate the hub body (10).

4. The hub in accordance with claim 1, wherein the mounting portion (31) has a periphery formed with a chamfered slideway (32), and the pawl member (40) is slidable in the slideway (32) of the mounting portion (31).

5. The hub in accordance with claim 4, wherein the mounting portion (31) has a receiving space (44) defined between the pawl member (40) and a closed end of the slideway (32) of the mounting portion (31) to allow retracting movement of the pawl member (40).

6. The hub in accordance with claim 4, wherein the pawl member (40) has a periphery formed with the locking teeth (41) and mating with the periphery of the mounting portion (31) to form a whole circle.

7. The hub in accordance with claim 5, wherein the closed end of the slideway (32) of the mounting portion (31) is formed with a limit recess to receive a first end of the elastic member (50), and the pawl member (40) has a first side slidable in the slideway (32) of the mounting portion (31) and a second side formed with a limit recess to receive a second end of the elastic member (50).

8. The hub in accordance with claim 6, wherein the periphery of the mounting portion (31) is formed with a retaining groove (34) to retain the elastic ring (60), and the periphery of the pawl member (40) is formed with a retaining groove (42) to retain the elastic ring (60).

9. The hub in accordance with claim 4, wherein the pawl member (40) has a shape mating with that of the slideway (32) of the mounting portion (31) and has a size smaller than that of the slideway (32) of the mounting portion (31).

10. The hub in accordance with claim 5, wherein when the pawl member (40) is pushed outwardly relative to the mounting portion (31) to the first position, the locking teeth (41) of the pawl member (40) engage the locking teeth (21) of the locking ring (20), and when the pawl member (40) is pressed inwardly relative to the mounting portion (31) to the second position, the pawl member (40) is retracted into the receiving space (44), and the locking teeth (41) of the pawl member (40) disengage the locking teeth (21) of the locking ring (20).

## Patentansprüche

1. Nabe, umfassend:
eine Welle (11);
einen auf der Welle (11) rotierbar angeordneten Nabenkörper (10);
einen auf der Welle (11) rotierbar angeordneten Freilauf (30);
einen in dem Nabenkörper (10) oder in dem Freilauf (30) aufgenommenen Sperrring (20), an dessen Innenseite Sperrzähne (21) ausgebildet sind; einen an dem Nabenkörper (10) oder an dem Freilauf (30) angeordneten Montageabschnitt (31), der sich in den Sperrring (20) erstreckt;
wenigstens eine Sperrklinke (40) mit Sperrzähnen (41), die auf dem Montageabschnitt (31) zwischen einer ersten Position, in der die Sperrzähne (41) der Sperrklinke (40) mit den Sperrzähnen (21) des Sperrringes (20) in Eingriff stehen, und einer zweiten Position, in der die Sperrzähne (41) der Sperrklinke (40) außer Eingriff von den Sperrzähnen (21) des Sperrringes (20) sind, bewegbar ist;
wenigstens ein zwischen dem Montageabschnitt (31) und der Sperrklinke (40) vorgespanntes elastisches Element (50), das die Sperrzähne (41) der Sperrklinke (40) mit den Sperrzähnen (21) des Sperrring (20) in Eingriff bringt;
einen elastischen Ring (60), der zum Halten der auf dem Montageabschnitt (31) angeordneten Sperrklinke (40) den Montageabschnitt (31) und die Sperrklinke (40) umschließt.

2. Nabe nach Anspruch 1,
**dadurch gekennzeichnet,**
**dass** zum Antreiben und Rotieren des Nabenkörpers (10) der Sperrring (20) in dem Nabenkörper (10) aufgenommen ist und dass der Montageabschnitt (31) auf dem Freilauf (30) montiert ist.

3. Nabe nach Anspruch 1,
**dadurch gekennzeichnet,**
**dass** zum Antreiben und Rotieren des Nabenkörpers (10) der Sperrring (20) in dem Freilauf (30) aufgenommen ist und dass der Montageabschnitt (31) auf dem Nabenkörper (10) montiert ist.

4. Nabe nach Anspruch 1,
**dadurch gekennzeichnet,**
**dass** der Montageabschnitt (31) einen Umfang mit einer abgeschrägten Gleitbahn (32) ausbildet und dass die Sperrklinke (40) auf der Gleitbahn (32) des Montageabschnitts (31) verschiebbar ist.

5. Nabe nach Anspruch 4,
**dadurch gekennzeichnet,**
**dass** zum Zurückziehen der Sperrklinke (40) der Montageabschnitt (31) zwischen der Sperrklinke (40) und einem begrenzten Ende der Gleitbahn (32) des Montageabschnittes (31) einen Aufnahmeraum (44) ausbildet.

6. Nabe nach Anspruch 4,
**dadurch gekennzeichnet,**
**dass** die Sperrklinke (40) einen Umfang mit den Sperrzähnen (41) besitzt, der zusammen mit dem Umfang des Montageabschnittes (31) einen vollständigen Kreis ausbildet.

7. Nabe nach Anspruch 5,
**dadurch gekennzeichnet,**
**dass** das hintere Ende der Gleitbahn (32) des Montageabschnitts (31) eine Ausnehmung zum Aufnehmen eines ersten Endes des elastischen Elements (50) ausbildet und dass die Sperrklinke (40) eine erste Seite aufweist, die auf der Gleitbahn (32) gleitbar ist, und eine zweite Seite aufweist, die eine Ausnehmung zum Aufnehmen eines zweiten Endes des elastischen Elements (50) besitzt.

8. Nabe nach Anspruch 6,
**dadurch gekennzeichnet,**
**dass** der Umfang des Montageabschnitts (31) eine Haltenut (34) zum Aufnehmen des elastischen Ringes (60) aufweist und dass der Umfang der Sperrklinke (40) eine Haltenut (42) zum Aufnehmen des elastischen Ringes (60) aufweist.

9. Nabe nach Anspruch 4,
**dadurch gekennzeichnet,**
**dass** die Sperrklinke (40) eine Form besitzt, die der Form der Gleitbahn (32) des Montageabschnitts (31) entspricht und eine Größe besitzt, die kleiner ist als die der Gleitbahn (32) des Montageabschnitts (31).

10. Nabe nach Anspruch 5,
**dadurch gekennzeichnet,**
**dass**, sobald die Sperrklinke (40) relativ zum Montageabschnitt (31) in die erste Position geschoben wird, die Sperrzähne (41) der Sperrklinke (40) mit den Sperrzähnen (21) des Sperrringes (20) in Eingriff stehen, und
sobald die Sperrklinke (40) relativ zum Montageabschnitt (31) in die zweite Position geschoben ist, die Sperrklinke (40) in den Aufnahmeraum (44) zurückgezogen wird und die Sperrzähne (41) der Sperrklinke (40) außer Eingriff von den Sperrzähne (21) des Sperrringes (20) sind.

## Revendications

1. Moyeu, comprenant :
- un arbre (11) ;
- un corps de moyeu (10) monté rotatif sur l'arbre (11) ;
- un siège d'entraînement (30) monté rotatif sur l'arbre (11) ;
- une bague de blocage (20) montée dans l'un ou l'autre du corps de moyeu (10) et du siège d'entraînement (30) et ayant un intérieur comportant une pluralité de dents de blocage (21) ;
- une partie de montage (31) montée sur l'autre du corps de moyeu (10) et du siège d'entraînement (30) et s'étendant dans la bague de blocage (20) ;
- au moins un élément de cliquet (40) mobile sur la partie de montage (31) entre une première position où les dents de blocage (41) de l'élément de cliquet (40) engagent les dents de blocage (21) de la bague de blocage (20) et une seconde position où les dents de blocage (41) de l'élément de cliquet (40) se désengagent des dents de blocage (41) de la bague de blocage (20) ;
- une bague élastique (60) enfermée autour de la partie de montage (31) et de l'élément de cliquet (40) pour limiter l'élément de cliquet (40) sur la partie de montage (31) ; **caractérisé par** :
- au moins un élément élastique (50) qui est sollicité entre la partie de montage (31) et l'élément de cliquet (40) pour pousser les dents de blocage (41) de l'élément de cliquet (40) vers les dents de blocage (21) de la bague de blocage (20) ; et le ou les éléments de cliquet (40) ayant plusieurs dents de blocage (41).

2. Moyeu selon la revendication 1, dans lequel la bague de blocage (20) est montée dans le corps de moyeu (10) pour entraîner et faire tourner le corps de moyeu (10), et la partie de montage (31) est montée sur le siège d'entraînement (30).

3. Moyeu selon la revendication 1, dans lequel la bague de blocage (20) est montée dans le siège d'entraînement (30), et la partie de montage (31) est montée sur le corps de moyeu (10) pour entraîner et faire tourner le corps de moyeu (10).

4. Moyeu selon la revendication 1, dans lequel la partie de montage (31) a une périphérie comportant une glissière chanfreinée (32), et l'élément de cliquet (40) est coulissant dans la glissière (32) de la partie de montage (31).

5. Moyeu selon la revendication 4, dans lequel la partie de montage (31) a un espace de réception (44) défini entre l'élément de cliquet (40) et une extrémité fermée de la glissière (32) de la partie de montage (31) pour permettre un mouvement de rétraction de l'élément de cliquet (40).

6. Moyeu selon la revendication 4, dans lequel l'élément de cliquet (40) a une périphérie comportant les dents de blocage (41) et s'appariant avec la périphérie de la partie de montage (31) pour former un cercle entier.

7. Moyeu selon la revendication 5, dans lequel l'extrémité fermée de la glissière (32) de la partie de montage (31) comporte une cavité limite pour recevoir une première extrémité de l'élément élastique (50), et l'élément de cliquet (40) a un premier côté coulissant dans la glissière (32) de la partie de montage (31) et un second côté comportant une cavité limite pour recevoir une seconde extrémité de l'élément élastique (50).

8. Moyeu selon la revendication 6, dans lequel la périphérie de la partie de montage (31) comporte une rainure de retenue (34) pour retenir la bague élastique (60), et la périphérie de l'élément de cliquet (40) comporte une rainure de retenue (42) pour retenir la bague élastique (60).

9. Moyeu selon la revendication 4, dans lequel l'élément de cliquet (40) a une forme s'appariant avec celle de la glissière (32) de la partie de montage (31) et a une dimension plus petite que celle de la glissière (32) de la partie de montage (31).

10. Moyeu selon la revendication 5, dans lequel, lorsque l'élément de cliquet (40) est poussé vers l'extérieur par rapport à la partie de montage (31) vers la première position, les dents de blocage (41) de l'élément de cliquet (40) engagent les dents de blocage (21) de la bague de blocage (20), et, lorsque l'élément de cliquet (40) est pressé vers l'intérieur par rapport à la partie de montage (31) vers la seconde position, l'élément de cliquet (40) est rétracté dans l'espace de réception (44), et les dents de blocage (41) de l'élément de cliquet (40) se désengagent des dents de blocage (21) de la bague de blocage (20).
